# DEMANDE DE BREVET EUROPEEN

(11) **EP 1 911 576 A1**
(43) Date de publication de la demande: **16.04.2008**
(21) Numéro de dépôt: 07291205.8
(22) Date de dépôt: 04.10.2007
(51) Int. Cl.: B32B 1/08, B32B 27/34, F16L 11/04

(54) **Canalisation PPA/fluoropolymère**

(30) Priorité: 10.10.2006 FR 0608854
(71) Demandeur: Nobel Plastiques, 78300 Poissy (FR)
(72) Inventeur: Cheng, Cyrielle, 85160 Saint-Jean de Monts (FR); Milhas, Pierre, 51300 Vitry-le-Francois (FR)
(74) Mandataire: Lavialle, Bruno François Stéphane

(57) **Abrégé**

Canalisation comportant une couche en polyphtalamide et une couche en polymère fluoré.

## Description

La présente invention concerne une canalisation utilisable pour le transport de fluides automobiles, par exemple dans un moteur thermique pour transporter de l'huile de transmission ou un carburant et, entre autres, un carburant alcoolisé.

### ARRIERE PLAN DE L'INVENTION

Il existe de nombreuses structures de canalisations utilisables pour transporter un liquide sous pression dans les conditions d'utilisation propres à un véhicule automobile. Compte tenu de la sévérité de ces conditions, tant en termes de résistances mécanique, chimique, physique ou thermique, aucune structure ne s'est avérée totalement satisfaisante et ce d'autant plus qu'à ces sévères conditions d'utilisation viennent se greffer des exigences de coût et de fabricabilité. La recherche d'une solution représentant un compromis idéal a pourtant touché de nombreux matériaux allant des métaux jusqu'aux élastomères en passant par les thermoplastiques.

A titre d'exemple de ces contraintes, le fonctionnement des boîtes de vitesses automatiques des véhicules automobiles entraîne un échauffement du fluide de transmission qui peut détériorer la boîte de vitesses automatique. Il est donc généralement prévu un refroidisseur équipant le circuit hydraulique associé à la boîte de vitesses automatique. La boîte de vitesses et le refroidisseur sont reliés par une canalisation qui doit résister à des températures comprises entre -40°C et 150°C, des pressions allant de 10 à 40 bars, des produits chimiques avec lesquels la canalisation peut être en contact occasionnel (huiles, solutions salines, liquides de protection moteur, acides de batterie...) et des efforts mécaniques (débattements, chocs, vibrations entre autres). Les canalisations actuellement utilisées pour le transport du liquide de refroidissement de l'huile de transmission sont des canalisations métalliques ou des canalisations en caoutchouc associées à une tresse métallique. Ces canalisations sont cependant relativement chères, sensibles à la corrosion, peu flexibles et lourdes. On a pour ces raisons, envisagé d'utiliser des canalisations en matériau thermoplastique et plus particulièrement en polyamide-12 mais celui-ci ne résiste pas à des températures au-delà de 120°C. En outre, ces canalisations sont sensibles à l'humidité qui pourrait en diminuer les performances.

Dans une autre application, à savoir le transport de carburant, il a été utilisé des canalisations monocouches en polymère fluoré. Ces canalisations sont toutefois très onéreuses. Il est également connu d'utiliser le polyamide pour ses bonnes propriétés mécaniques et son faible coût. En revanche, le polyamide n'est pas utilisable au-delà de 145°C.

### OBJET DE L'INVENTION

Par l'invention, on entend proposer une alternative aux structures existantes apportant une réponse satisfaisante aux différentes contraintes liées à son utilisation notamment sur un véhicule automobile.

### RESUME DE L'INVENTION

A cet effet, on prévoit, selon l'invention, une canalisation comportant au moins une couche majoritairement en polyphtalamide et une couche majoritairement en un polymère fluoré.

Ainsi, le polyphtalamide va assurer l'essentiel de la faible perméabilité de la canalisation et de la résistance de la canalisation aux sollicitations mécaniques, aux agressions chimiques, et aux contraintes physiques et thermiques. La couche en polymère fluoré assure ainsi une bonne protection de la canalisation contre les agressions externes sans entraver la flexibilité de ladite canalisation. Le polymère fluoré présente en outre l'avantage d'être hydrophobe de sorte qu'il empêche une contamination du fluide transporté par de l'eau. Le polymère fluoré présente en outre une excellente tenue thermique jusqu'à une température voisine de 165°C. Une telle canalisation peut alors être faiblement perméable, flexible, légère, insensible à la corrosion, résistante à la fatigue. Par ailleurs, le polyphtalamide a une propension à être plastiquement déformable à froid et dispose d'un faible allongement mécanique. Le polymère fluoré est alors choisi pour améliorer l'allongement mécanique et pour apporter à la canalisation sa rigidité et son élasticité pour en faire une canalisation relativement souple et élastiquement déformable.

D'autres caractéristiques et avantages de l'invention ressortiront à la lecture de la description qui suit de modes de réalisation particuliers non limitatifs de l'invention.

### DESCRIPTION DETAILLEE DE L'INVENTION

Selon un premier mode de réalisation, la canalisation comporte une couche en polyphtalamide en couche externe et une couche en polymère fluoré en couche interne.

Les polymères fluorés utilisables sont notamment le polyvinylidène fluoré (PVDF), l'éthylène tetrafluoroéthylène (ETFE), l'éthylène fluoroéthylène perfluorure (EFEP), le polytétrafluoroéthylène (PTFE), le fluoroéthylène propylène (FEP), le perfluoroalkoxy (PFA), l'éthylène chlorotrifluoroéthylène (ECTFE)...

A titre d'exemple le polymère fluoré peut être un FEP TEFLON de la société DUPONT DE NEMOURS et le polyphtalamide peut être celui produit sous la marque AMODEL par la société SOLVAY.

Cette canalisation est particulièrement bien adaptée au transport de carburant et notamment des carburants alcoolisés car les performances globales des matériaux utilisés sont très stables en milieu alcoolisé.

En variante, lorsque les propriétés d'adhésion ne sont pas suffisantes au regard des conditions d'utilisation de la canalisation, il est possible d'ajouter une couche de liaison entre la couche interne et la couche externe ou, éventuellement entre ces couches et des couches intermédiaires. Les couches de liaison sont par exemple à base de polyamide.

En variante encore, la canalisation peut comprendre une couche supplémentaire par exemple en thermoplastique élastomère (TPE). La couche en thermoplastique élastomère est de préférence disposée en couche externe pour protéger la canalisation des chocs et du feu.

Le fluoroéthylène propylène (ou plus généralement le polymère fluoré) utilisé peut en outre être rendu adhésif au polyamide et la canalisation peut comprendre une couche intermédiaire de polyamide entre la couche de fluoroéthylène propylène et la couche de polyphtalamide. D'autres couches intermédiaires peuvent être ajoutées.

Dans un deuxième mode de réalisation, la canalisation conforme à l'invention comprend une couche interne réalisée en polyphtalamide (PPA) ayant une épaisseur comprise entre 1 et 1,5 mm.

La canalisation comprend en outre une couche externe réalisée en un fluoropolymère et de préférence en un terpolymère de tétrafluoroéthylène, d'hexafluoropropylène et de vinylidène fluoré (THV). D'autres polymères fluorés sont utilisables, tels que : le polyvinylidène fluoré (PVDF), l'éthylène tétrafluoroéthylène (ETFE), l'éthylène fluoroéthylène perfluorure (EFEP), le polytétrafluoroéthylène (PTFE), le fluoroéthylène propylène (FEP), le perfluoroalkoxy (PFA), l'éthylène chlorotrifluoroéthylène (ECTFE).... De préférence, l'épaisseur de la couche en polyphtalamide est cinq à dix fois supérieure à l'épaisseur de la couche en polymère fluoré. La couche externe a une épaisseur d'environ 0,2 mm.

Ce rapport d'épaisseur est la solution optimale pour réaliser la canalisation conforme au deuxième mode de réalisation de l'invention.

La canalisation conforme à l'invention est réalisée par extrusion et la couche externe est en contact direct avec la couche interne. Ceci est rendu possible par les bonnes propriétés d'adhésion mutuelle du polyphtalamide et du terpolymère fluoré.

En variante, lorsque les propriétés d'adhésion ne sont pas suffisantes au regard des conditions d'utilisation de la canalisation, il est possible d'ajouter une couche de liaison entre la couche interne et la couche externe.

Bien entendu, l'invention n'est pas limitée aux modes de réalisation décrits et on peut y apporter des variantes de réalisation sans sortir du cadre de l'invention tel que défini par les revendications.

La canalisation peut comprendre plus de deux couches.

Les matériaux utilisés peuvent comprendre des charges, additifs ou adjuvants pour par exemple les rendre compatibles entre eux (amélioration de leur propriété adhésive) ou conducteurs, les renforcer mécaniquement ou les colorer... ou être associés à d'autres matériaux au sein d'une même couche.

Les épaisseurs sont indiquées à titre indicatif. D'autres épaisseurs que celles mentionnées sont utilisables.

## Revendications

1. Canalisation comportant au moins une couche majoritairement en polyphtalamide et une couche majoritairement en polymère fluoré.

2. Canalisation selon la revendication 1, dans laquelle la couche de polyphtalamide est en couche externe et la couche en polymère fluoré est en couche interne.

3. Canalisation selon la revendication 2 dans laquelle le polymère fluoré est sélectioné parmi le polyvinylidène fluoré (PVDF), l'éthylène tetrafluoroéthylène (ETFE), l'éthylène fluoroéthylène perfluorure (EFEP), le polytétrafluoroéthylène (PTFE), le fluoroéthylène propylène (FEP), le perfluoroalkoxy (PFA), l'éthylène chlorotrifluoroéthylène (ECTFE).

4. Canalisation selon la revendication 1, dans laquelle la couche de polyphtalamide est la couche la plus à l'intérieur du tube.

5. Canalisation selon la revendication 1, dans laquelle la canalisation a une épaisseur principalement formée par une épaisseur de la couche en polyphtalamide.

6. Canalisation selon la revendication 5, dans laquelle l'épaisseur de la couche en polyphtalamide est cinq à dix fois supérieure à l'épaisseur de la couche en polymère fluoré.

7. Canalisation selon la revendication 6, dans laquelle l'épaisseur de la couche en polyphtalamide est de l'ordre de 1 à 1,5 mm et l'épaisseur de la couche en polymère fluoré est de l'ordre de 0,2 mm.

8. Canalisation selon la revendication 4, dans laquelle le polymère fluoré est un terpolymère de tétrafluoroéthylène, d'hexafluoropropylène et de vinylidène fluoré.

9. Canalisation selon la revendication 1, dans laquelle la couche en polymère fluoré est directement en contact avec la couche en polyphtalamide. laquelle la couche en polymère fluoré est directement en contact avec la couche en polyphtalamide.
